# FASCICULE DE BREVET EUROPEEN

(11) **EP 2 816 436 B1**
(45) Date de publication et mention de la délivrance du brevet: **22.08.2018**
(21) Numéro de dépôt: 13172827.1
(22) Date de dépôt: 19.06.2013
(51) Int. Cl.: G05D 16/06

(54) **Détendeur de gaz à sécurité de surpression intégrée**
Gasdruckregelventil mit integrierter Überdrucksicherung
Gas regulator with integrated excess pressure safety

(43) Date de publication de la demande: 24.12.2014
(73) Titulaire: Clesse Industries, 63800 Cournon d'Auvergne (FR)
(72) Inventeur: Bruhat, Pascal, 63800 La Roche Noire (FR); Pages, Fabien, 63430 Pont du Château (FR)
(74) Mandataire: Gaillarde, Frédéric F. Ch.

(56) Documents cités:
- WO-A1-94/02768
- DE-A1- 3 706 579
- US-A- 2 581 071
- US-A- 3 623 506

## Description

La présente demande de brevet se rapporte à un détendeur à sécurité de surpression intégrée.

De manière largement répandue, on utilise du gaz de pétrole liquéfié (GPL, comme par exemple du butane, du propane, ou des mélanges de ces gaz) à des fins domestiques.

Ce gaz permet de faire fonctionner des appareils domestiques tels que des chaudières ou des gazinières.

De manière courante, ce gaz est stocké sous haute pression à l'état liquide dans des réservoirs (bouteilles ou cuves) dont la capacité peut typiquement varier de 3 kg à 1500 kg, et qui sont remplacés ou rechargés lorsqu'ils sont vides.

Le gaz qui arrive dans les chaudières ou gazinières doit être à une pression très nettement inférieure à celle du stockage en réservoir : cette pression d'utilisation doit typiquement être de l'ordre de 28, 37 ou 50 mbar.

Il faut donc placer un dispositif de réduction de la pression entre le réservoir de gaz et l'appareil domestique concerné : un tel dispositif, couramment appelé détendeur, permet, grâce à un système de soupape, d'obtenir une régulation en débit (typiquement 4 à 5 kg de gaz par heure) et en pression (typiquement 28, 37 ou 50 mbar) du gaz alimentant l'appareil domestique.

Il peut arriver que le détendeur ne remplisse plus correctement sa fonction, en raison par exemple d'un encrassement excessif, et qu'il ne permette plus une régulation suffisante de la pression du gaz provenant du réservoir de stockage.

Dans ce cas, la pression du gaz qui arrive à l'appareil domestique est trop importante, et cela peut avoir des effets néfastes : détérioration de matériel, mauvaise combustion, soufflage de flamme, fuite de gaz...

Pour cette raison, il existe dans l'état de la technique des systèmes de sécurité couramment désignés par « OPSO » (« Over Pressure Shut-Off » - fermeture en cas de surpression), permettant d'interrompre le flux de gaz sortant du détendeur en cas de surpression de ce gaz.

Un tel système est fourni indépendamment du détendeur lui-même, et doit être couplé à celui-ci lors de l'installation.

Il en résulte un surcroît de complexité de l'installation, des connexions supplémentaires potentiellement génératrices de fuites, et un encombrement plus important.

On connaît de DE 37 06 579 , de DE 38 13 962, de WO 94/02768 et de US 3,623,506 des détendeurs incorporant des systèmes OPSO, ce qui permet de supprimer les contraintes d'installation et de connexion d'un appareil supplémentaire, et de limiter l'encombrement global au seul détendeur.

Dans les trois premiers documents susmentionnés, correspondant au préambule de la revendication 1 ci-annexée, ce système de sécurité permet de plus de voir immédiatement de l'extérieur lorsque le système de sécurité de surpression est désarmé.

La présente invention vise à améliorer ces détendeurs de la technique antérieure.

On atteint ce but de l'invention avec un détendeur de gaz, comprenant un corps définissant au moins une chambre dans laquelle débouchent une arrivée et une sortie de gaz, des moyens pour réduire la pression du gaz dans ladite chambre, et des moyens pour bloquer la circulation du gaz entre ladite arrivée et ladite sortie lorsque la pression du gaz dans ladite chambre dépasse un seuil prédéterminé, ces moyens de blocage de la circulation du gaz comprenant un axe obturateur mobile entre une position d'ouverture et une position d'obturation complète de ladite arrivée de gaz, des moyens de rappel élastique de cet axe obturateur vers sa position d'obturation complète, des moyens pour verrouiller cet axe obturateur dans sa position d'ouverture, et des moyens pour commander l'ouverture de ces moyens de verrouillage lorsque la pression du gaz dans ladite chambre dépasse un seuil prédéterminé,
ledit détendeur comprenant également des moyens pour indiquer à l'extérieur du détendeur le passage dudit axe obturateur de sa position d'ouverture vers sa position d'obturation complète, ces moyens comprenant un bouton-poussoir comportant une tête visible de l'extérieur du détendeur et un axe de réarmement,
ce détendeur de gaz étant remarquable en ce que ledit axe de réarmement s'étend selon une direction sensiblement perpendiculaire à celle de la tige dudit axe obturateur, des moyens élastiques rappelant ledit bouton-poussoir vers l'intérieur dudit détendeur, un biseau étant formé à l'extrémité de la tige dudit axe obturateur, et une bille étant interposée entre l'extrémité dudit axe de réarmement et ledit biseau.

Grâce à ces caractéristiques, on peut actionner le bouton-poussoir depuis le côté du détendeur, c'est-à-dire dans une zone dégagée de toute canalisation d'arrivée ou de sortie de gaz.

Suivant d'autres caractéristiques optionnelles de la présente invention :
- lesdits moyens de réduction de la pression du gaz dans ladite chambre comprennent un levier mobile entre une pluralité de positions d'obturation partielle de ladite arrivée, et des moyens pour déplacer ce levier vers une position d'obturation accrue lorsque la pression de gaz à l'intérieur de ladite chambre augmente ;
- lesdits moyens de déplacement dudit levier comprennent une première membrane élastique formant l'une des parois de ladite chambre, un premier ressort agissant sur cette première membrane élastique en direction de ladite chambre, et une première chape solidaire de cette membrane et coopérant avec ledit levier ;
- lesdits moyens de verrouillage comprennent une encoche formée dans la tige dudit axe obturateur, et une bille mobile entre une position verrouillée dans laquelle elle est placée dans ladite encoche, et une position déverrouillée dans laquelle elle est éloignée de ladite encoche ;
- lesdits moyens de commande desdits moyens de verrouillage comprennent une deuxième membrane élastique formant l'une des parois de ladite chambre, un deuxième ressort agissant sur cette deuxième membrane élastique en direction de ladite chambre, et un axe de verrouillage relié à ladite membrane et en contact avec ladite bille ;
- ledit détendeur comprend une soupape de décharge à l'atmosphère, adaptée pour s'ouvrir sous l'effet de la pression du gaz dans ladite chambre lorsque cette pression dépasse un seuil de sécurité inférieur audit seuil prédéterminé.

D'autres caractéristiques et avantages de la présente invention apparaîtront à la lumière de la description qui va suivre, et à l'examen des figures ci-annexées, dans lesquelles :
- la figure 1 est une vue en perspective et en coupe prise selon la ligne A-C de la figure 4 d'un détendeur selon l'invention, lorsqu'il se trouve en configuration de fonctionnement normal,
- la figure 2 est une vue en coupe selon la ligne A-B de la figure 4 de ce détendeur en configuration de fonctionnement normal,
- la figure 3 est une vue en coupe prise selon la ligne C-D de la figure 4 de ce détendeur en configuration de fonctionnement normal,
- la figure 4 est une vue en coupe selon la ligne E-F de la figure 2 de ce détendeur en configuration de fonctionnement normal, et
- les figures 5, 6 et 7 sont des vues analogues respectivement à celles des figures 2, 3 et 4 de ce détendeur en configuration OPSO, c'est-à-dire de fermeture en cas de surpression.

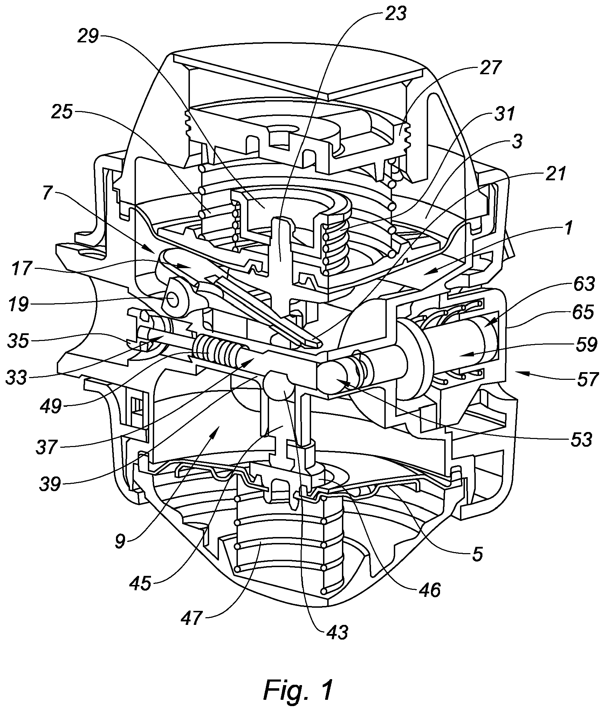

En se reportant aux figures 1 à 4, on peut voir que le détendeur selon l'invention comprend un corps 1 fermé par une première membrane élastique 3 et par une deuxième membrane élastique 5, formées par exemple en tôle emboutie.

Ces première 3 et deuxième 5 membranes élastiques définissent avec le corps 1 respectivement les première 7 et deuxième 9 chambres communiquant entre elles.

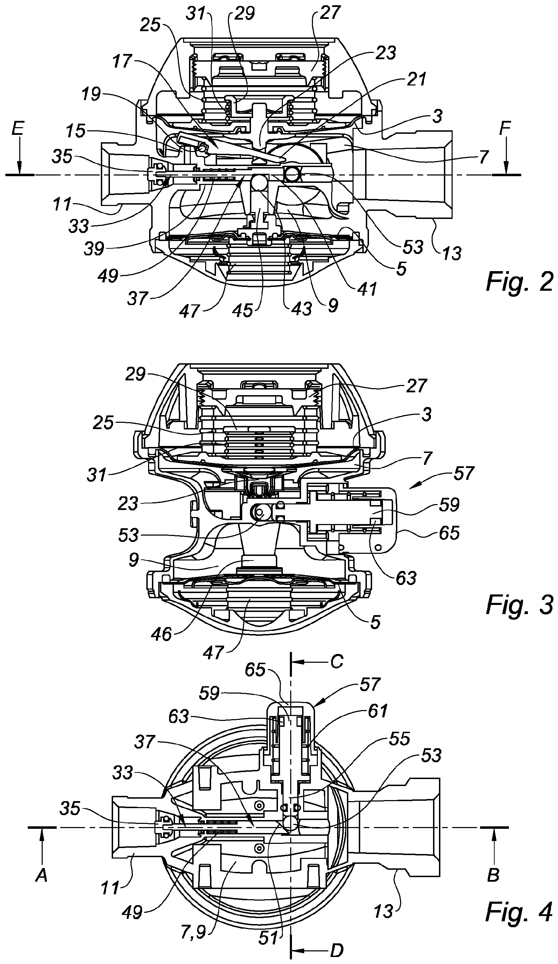

Comme on peut le voir notamment sur les figures 2 et 4, une arrivée de gaz 11 et une sortie de gaz 13 communiquent avec les chambres 7 et 9.

Plus précisément, comme cela est visible en particulier sur la figure 2, l'arrivée de gaz 11 communique avec la première chambre 7 par un orifice 15 susceptible d'être plus ou moins obturé par un levier 17 montée pivotant autour d'un axe 19.

Ce levier 17 est muni d'une tige 21, coopérant avec une première chape 23 solidaire de la première membrane élastique 3. Un premier ressort 25 maintenu par un premier couvercle 27 agit sur la première membrane 3 en direction de la première chambre 7.

A noter par ailleurs que la première chape 23 est reliée à une soupape 29 de décharge à l'atmosphère, rappelée en position de fermeture par un ressort qui lui est propre 31.

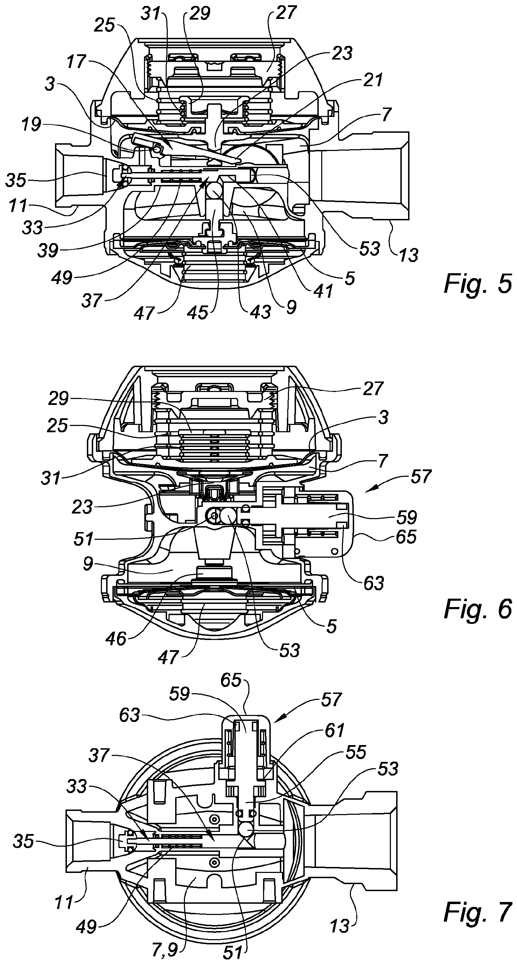

Un axe obturateur 33, muni d'un obturateur 35 situé à l'intérieur de l'arrivée 11, et d'une tige 37 montée coulissante dans un prolongement tubulaire 39 de cette arrivée 11, est mobile entre une position d'ouverture visible aux figures 1, 2 et 4, dans laquelle du gaz peut circuler de l'arrivée 11 jusqu'à l'orifice 15, et une position d'obturation complète visible sur les figures 5 et 7, dans lesquelles cette circulation de gaz n'est plus possible.

La tige 37 comporte une encoche 41 à l'intérieur de laquelle peut se loger une première bille 43, poussée par un axe de verrouillage 45, relié à la deuxième membrane élastique 5 par une deuxième chape 46, étant noté que cette deuxième membrane élastique 5 est elle-même poussée en direction de la deuxième chambre 9 par un deuxième ressort 47 analogue au premier ressort 25.

On notera par ailleurs qu'un ressort 49 disposé autour de la tige 37 de l'axe obturateur 33, rappelle cet axe vers sa position d'obturation complète de l'arrivée de gaz 11.

A son extrémité opposée à celle sur laquelle se trouve l'obturateur 35, la tige 37 présente une extrémité biseautée 51, visible notamment sur la figure 4, coopérant avec une deuxième bille 53 elle-même maintenue en pression contre cette partie biseautée 51 par l'axe de réarmement 55 d'un bouton poussoir 57 dont la tête 59 est visible de l'extérieur du détendeur selon l'invention.

Le maintien en pression de la bille 53 par l'axe de réarmement 55 est assuré par un ressort 61, monté à l'intérieur de la tête 59 du bouton poussoir 57.

Lorsque le détendeur selon l'invention se trouve en configuration de sécurité OPSO, comme cela est visible sur les figures 5 à 7, l'axe obturateur 33 a coulissé vers la droite des figures 5 et 7, de sorte que :
- l'obturateur 35 de l'axe obturateur 33 obture l'arrivée des gaz 11,
- la première bille 43 est sortie de l'encoche 41 de la tige 37 de cet axe obturateur, et
- la deuxième bille 53 est repoussée par le biseau 51 de la tige 37, de sorte que la tête 59 du bouton poussoir 57 est repoussée vers l'extérieur du détendeur, rendant visible une marque de couleur 63 disposée sur la tête 59 du bouton poussoir 57, lorsque cette dernière est passée d'une zone opaque à une zone translucide d'un cabochon 65 recouvrant la tête 59..

Le mode de fonctionnement et les avantages de la présente invention résultent directement de la description qui précède.

En mode de fonctionnement normal, visible sur les figures 1 à 4, le gaz sous haute pression arrivant d'un réservoir de stockage tel qu'une bouteille ou une cuve, pénètre à l'intérieur de l'arrivée de gaz 11, puis vers l'orifice 15, l'obturateur 35 de l'axe obturateur 33 autorisant ce passage.

La pression instaurée par ce gaz à l'intérieur des chambres 7 et 9 agit sur la première membrane élastique 3, laquelle est susceptible de se déplacer à l'encontre du premier ressort 25, lorsque cette pression augmente.

Cette augmentation de pression a ainsi pour effet de provoquer un déplacement axial de la première chape 23, laquelle à son tour provoque une rotation du levier 17 autour de son axe de rotation 19, permettant ainsi de réguler le débit d'arrivée de gaz par l'orifice 15, et donc la pression à l'intérieur des chambres 7 et 9, et in fine la pression délivrée par la sortie de gaz 13.

Lorsque la pression de gaz à l'intérieur des chambres 7 et 9 dépasse un premier seuil de sécurité, du gaz peut s'échapper par la soupape de décharge à l'atmosphère 29, dont le ressort associé 31 est taré de manière appropriée.

Ce dispositif de soupape de décharge à l'atmosphère permet de gérer des petites surpressions, fréquentes dans le fonctionnement courant d'un détendeur.

Lorsque pour une raison quelconque la pression de gaz à l'intérieur des chambres 7 et 9 continue malgré tout d'augmenter, le dispositif de sécurité particulier selon l'invention intervient.

Une telle augmentation de la pression peut être due par exemple à un encrassement du levier 17, ne remplissant plus son rôle de régulation du débit de gaz, de sorte que la pression vue à l'intérieur des chambres 7 et 9 devient supérieure à un seuil prédéterminé de sécurité.

Le dispositif de sécurité particulier selon l'invention fonctionne de la manière suivante.

L'augmentation de la pression du gaz dans les chambres 7 et 9 a pour effet de repousser la deuxième membrane 5 à l'encontre du ressort 47, de sorte que l'axe de verrouillage 45, et par là-même la première bille 43, s'écartent de l'encoche 41 formée dans la tige 37 de l'axe obturateur 33.

Ce faisant, sous l'action du ressort 49 qui se trouve autour de cette tige, l'axe obturateur 33 coulisse vers la droite des figures 2 et 4, jusqu'à ce qu'il se retrouve dans la position des figures 5 et 7.

Dans cette dernière position, l'obturateur 35 de l'axe obturateur 33 obture l'arrivée de gaz 11 et la deuxième bille 53 a été repoussée par le biseau 51 de la tige 37, faisant sortir vers l'extérieur du détendeur le bouton poussoir 57, dont la tête 59 devient alors visible par un utilisateur : cette visibilité peut être accrue par la marque de couleur 63 disposée sur la tête 59 du bouton poussoir 57, passant de la partie opaque à la partie translucide du cabochon 65.

Comme on peut le comprendre à la lumière de ce qui précède, le système de sécurité selon l'invention permet de bloquer totalement le flux de gaz à travers le détendeur lorsque la pression dans les chambres 7 et 9 de ce détendeur dépasse un seuil prédéterminé de sécurité, supérieur au seuil de pression provoquant l'ouverture de la soupape de décharge à l'atmosphère 29.

Le système de sécurité selon l'invention est donc un système simple et très fiable permettant d'éviter les surpressions importantes en aval du détendeur, et tous les risques inhérents à un dysfonctionnement de la fonction détente.

Lorsque la pression dans les chambres 7 et 9 est redevenue normale, le ressort 47 exerce sur la deuxième membrane élastique 5 un effet de poussée supérieur à celui qu'exerce cette pression, de sorte que l'axe de verrouillage 45 pousse la première bille 43 contre la tige 37 de l'axe obturateur 33.

Ainsi, pour réarmer le détendeur selon l'invention, c'est-à-dire pour le replacer dans sa configuration de fonctionnement normal, il suffit à un utilisateur d'appuyer sur le cabochon translucide 65, grâce à quoi la deuxième bille 53 exerce un effort de poussée sur le biseau 51 de la tige 37 de l'axe obturateur 33, provoquant la translation de cet axe obturateur vers la gauche des figures 5 et 7, jusqu'à ce que la première bille 43 vienne se repositionner à l'intérieur de l'encoche 41 formée sur la tige 37, assurant ainsi le blocage de l'axe obturateur 33 dans sa position d'ouverture, visible sur les figures 1, 2 et 4.

Bien entendu, la présente invention n'est nullement limitée aux modes de réalisation décrits et représentés, fournis à titre de simples exemples.

## Revendications

1. Détendeur de gaz, comprenant un corps (1) définissant au moins une chambre (7, 9) dans laquelle débouchent une arrivée (11) et une sortie (13) de gaz, des moyens (3, 17, 23, 25) pour réduire la pression du gaz dans ladite chambre (7, 9), et des moyens pour bloquer la circulation du gaz entre ladite arrivée et ladite sortie lorsque la pression du gaz dans ladite chambre (7, 9) dépasse un seuil prédéterminé, ces moyens de blocage de la circulation du gaz comprenant un axe obturateur (33) mobile entre une position d'ouverture et une position d'obturation complète de ladite arrivée de gaz (11), des moyens (49) de rappel élastique de cet axe obturateur (33) vers sa position d'obturation complète, des moyens (5, 41, 43, 45, 47) pour verrouiller cet axe obturateur (33) dans sa position d'ouverture, et des moyens pour commander l'ouverture de ces moyens de verrouillage lorsque la pression du gaz dans ladite chambre (7, 9) dépasse un seuil prédéterminé,
ledit détendeur comprenant également des moyens (49, 51, 53, 55, 57, 59), pour indiquer à l'extérieur du détendeur le passage dudit axe obturateur (33) de sa position d'ouverture vers sa position d'obturation complète, ce moyens comprenant un bouton-poussoir (57) comportant une tête (59) visible de l'extérieur du détendeur et un axe de réarmement (55),
ledit détendeur étant remarquable en ce que ledit axe de réarmement (55) s'étend selon une direction sensiblement perpendiculaire à celle de la tige (37) dudit axe obturateur (33), des moyens élastiques (49) rappelant ledit bouton-poussoir (57) vers l'intérieur dudit détendeur, un biseau (51) étant formé à l'extrémité de la tige (37) dudit axe obturateur (33), et une bille (53) étant interposée entre l'extrémité dudit axe de réarmement (55) et ledit biseau (51).

2. Détendeur selon la revendication 1, dans lequel lesdits moyens de réduction de la pression du gaz dans ladite chambre comprennent un levier (17) mobile entre une pluralité de positions d'obturation partielle de ladite arrivée (11), et des moyens (3, 23, 25) pour déplacer ce levier vers une position d'obturation accrue lorsque la pression de gaz à l'intérieur de ladite chambre augmente.

3. Détendeur selon la revendication 2, dans lequel lesdits moyens de déplacement dudit levier comprennent une première membrane (3) élastique formant l'une des parois de ladite chambre (7, 9), un premier ressort (25) agissant sur cette première membrane élastique (3) en direction de ladite chambre (7, 9), et une première chape (23) solidaire de cette membrane (3) et coopérant avec ledit levier (17).

4. Détendeur selon l'une quelconque des revendications précédentes, dans lequel lesdits moyens de verrouillage comprennent une encoche (41) formée dans la tige (37) dudit axe obturateur (33), et une bille (43) mobile entre une position verrouillée dans laquelle elle est placée dans ladite encoche (33), et une position déverrouillée dans laquelle elle est éloignée de ladite encoche (33).

5. Détendeur selon l'une quelconque des revendications précédentes, dans lequel lesdits moyens de commande desdits moyens de verrouillage comprennent une deuxième membrane (5) élastique formant l'une des parois de ladite chambre (7, 9), un deuxième ressort (47) agissant sur cette deuxième membrane élastique (5) en direction de ladite chambre (7, 9), et un axe de verrouillage (45) relié à ladite membrane (5) et en contact avec ladite bille (43).

6. Détendeur selon l'une quelconque des revendications précédentes, comprenant une soupape de décharge à l'atmosphère (29), adaptée pour s'ouvrir sous l'effet de la pression du gaz dans ladite chambre (7, 9) lorsque cette pression dépasse un seuil de sécurité inférieur audit seuil prédéterminé.

## Patentansprüche

1. Gasdruckregelventil, umfassend einen Korpus (1), der mindestens eine Kammer (7, 9) definiert, in welche eine Zufuhr (11) und ein Auslass (13) von Gas münden, Mittel (3, 17, 23, 25) zum Verringern des Drucks des Gases in der Kammer (7, 9), und Mittel zum Blockieren der Zirkulation des Gases zwischen der Zufuhr und dem Auslass, wenn der Druck des Gases in der Kammer (7, 9) einen vorbestimmten Grenzwert überschreitet, wobei diese Mittel zum Blockieren der Zirkulation des Gases eine Verschlussachse (33) umfassen, die zwischen einer Öffnungsposition und einer vollständigen Verschlussposition der Gaszufuhr (11) beweglich ist, elastische Mittel (49) zum Rückführen dieser Verschlussachse (33) in ihre vollständige Verschlussposition, Mittel (5, 41, 43, 45, 47) zum Verriegeln dieser Verschlussachse (33) in ihrer Öffnungsposition und Mittel zum Steuern der Öffnung dieser Mittel zum Verriegeln, wenn der Druck des Gases in der Kammer (7, 9) einen vorbestimmten Grenzwert überschreitet,
wobei das Druckregelventil auch Mittel (49, 51, 53, 55, 57, 59) umfasst, um außerhalb des Druckregelventils den Übergang der Verschlussachse (33) von ihrer Öffnungsposition in ihre vollständige Verschlussposition anzuzeigen, wobei diese Mittel einen Druckknopf (57) umfassen, der einen Kopf (59) aufweist, der von außerhalb des Druckregelventils sichtbar ist, und eine Rückstellungsachse (55),
wobei das Druckregelventil **dadurch gekennzeichnet ist, dass** sich die Rückstellungsachse (55) in eine im Wesentlichen senkrechte Richtung zu jener des Stabs (37) der Verschlussachse (33) erstreckt, wobei elastische Mittel (49) den Druckknopf (57) ins Innere des Druckregelventils rückführen, wobei eine Abschrägung (51) an dem Ende des Stabs (37) der Verschlussachse (33) gebildet ist, und eine Kugel (53) zwischen dem Ende der Rückstellungsachse (55) und der Abschrägung (51) eingesetzt ist.

2. Druckregelventil nach Anspruch 1, wobei die Mittel zum Verringern des Drucks des Gases in der Kammer einen Hebel (17) umfassen, der zwischen einer Vielzahl von Teilverschlusspositionen der Zufuhr (11) beweglich ist und Mittel (3, 23, 25) zum Verschieben dieses Hebels in eine erhöhte Verschlussposition, wenn der Gasdruck im Inneren der Kammer ansteigt.

3. Druckregelventil nach Anspruch 2, wobei die Mittel zum Verschieben dieses Hebels eine erste elastische Membran (3) umfassen, die eine der Trennwände der Kammer (7, 9) bildet, wobei eine erste Feder (25) auf diese erste elastische Membran (3) in Richtung der Kammer (7, 9) einwirkt und einen ersten Gabelkopf (23), der fest mit dieser Membran (3) verbunden ist und mit dem Hebel (17) zusammenwirkt.

4. Druckregelventil nach einem der vorstehenden Ansprüche, wobei die Mittel zum Verriegeln eine Einkerbung (41) umfassen, die in dem Stab (37) der Verschlussachse (33) gebildet ist, und eine Kugel (43), die zwischen einer verriegelten Position, in der sie in der Einkerbung (33) platziert ist, und einer freigegebenen Position, beweglich ist, in der sie von der Einkerbung (33) entfernt ist.

5. Druckregelventil nach einem der vorstehenden Ansprüche, wobei die Steuermittel der Mittel zum Verriegeln eine zweite elastische Membran (5) umfassen, die eine der Trennwände der Kammer (7, 9) bildet, und eine zweite Feder (47), die auf diese zweite elastische Membran (5) in Richtung der Kammer (7, 9) einwirkt, und eine Verriegelungsachse (45), die mit der Membran (5) verbunden und in Kontakt mit der Kugel (43) ist.

6. Druckregelventil nach einem der vorstehenden Ansprüche, ein Überströmventil in die Atmosphäre (29) umfassend, das angepasst ist, um sich unter der Wirkung des Drucks des Gases in der Kammer (7, 9) zu öffnen, wenn dieser Druck einen Sicherheitsgrenzwert unterhalb des vorbestimmten Grenzwerts überschreitet.

## Claims

1. A gas regulator, comprising a body (1) defining at least one chamber (7, 9) into which open a gas inlet (11) and a gas outlet (13), means (3, 17, 23, 25) for reducing the gas pressure in said chamber (7, 9), and means for blocking the gas circulation between said inlet and said outlet when the gas pressure in said chamber (7, 9) exceeds a predetermined threshold, these means for blocking the gas circulation comprising a shutter axis (33) movable between an opening position and a full shutter position of said gas inlet (11), elastic means (49) for returning this shutter axis (33) to its full shutter position, means (5, 41, 43, 45, 47) for locking this shutter axis (33) in its opening position, and means for controlling the opening of these locking means when the gas pressure in said chamber (7, 9) exceeds a predetermined threshold,
said gas regulator also comprising means (49, 51, 53, 55, 57, 59) for indicating, outside the regulator, the passage of said shutter axis (33) from its opening position to its full shutter position, this means comprising a push-button (57) including a head (59) visible from outside the regulator and a resetting axis (55),
said regulator being remarkable in that said resetting axis (55) extends according to a direction substantially perpendicular to that of the rod (37) of said shutter axis (33), elastic means (49) returning said push-button (57) inwardly of said regulator, a bevel (51) being formed at the end of the rod (37) of said shutter axis (33), and a ball (53) being interposed between the end of said resetting axis (55) and said bevel (51).

2. The regulator according to claim 1, wherein said means for reducing the gas pressure in said chamber comprise a movable lever (17) between a plurality of partial shutter positions of said inlet (11), and means (3, 23, 25) for displacing this lever to an increased shutter position when the gas pressure inside said chamber increases.

3. The regulator according to claim 2, wherein said means for displacing said lever comprise a first elastic membrane (3) forming one of the walls of said chamber (7, 9), a first spring (25) acting on this first elastic membrane (3) towards said chamber (7, 9), and a first clevis (23) secured to this membrane (3) and cooperating with said lever (17).

4. The regulator according to any one of the preceding claims, wherein said locking means comprise a notch (41) formed in the rod (37) of said shutter axis (33), and a movable ball (43) between a locked position in which it is placed in said notch (33), and an unlocked position in which it is remote from said notch (33).

5. The regulator according to any one of the preceding claims, wherein said means for controlling said locking means comprise a second elastic membrane (5) forming one of the walls of said chamber (7, 9), a second spring (47) acting on this second elastic membrane (5) towards said chamber (7, 9), and a locking axis (45) connected to said membrane (5) and in contact with said ball (43).

6. The regulator according to any one of the preceding claims comprising an atmosphere discharge valve (29), adapted to open under the effect of gas pressure in said chamber (7, 9) when this pressure exceeds a safety threshold below said predetermined threshold.
